# EUROPEAN PATENT APPLICATION

(11) **EP 1 715 288 A1**
(43) Date of publication of application: **25.10.2006**
(21) Application number: 06111328.8
(22) Date of filing: 17.03.2006
(51) Int. Cl.: G01B 5/20

(54) **Surface roughness and/ or contour shape measuring apparatus**

(30) Priority: 22.04.2005 JP 2005125174
(71) Applicant: TOKYO SEIMITSU CO.,LTD., Mitaka-shi Tokyo (JP)
(72) Inventor: Taniuchi, Nobuyuki, Tokyo (JP); Kubota, Kazuhiro, Tokyo (JP)
(74) Representative: Skone James, Robert Edmund

(57) **Abstract**

A surface roughness and/or contour shape measuring apparatus for measuring the surface shape of a work measurement surface by moving a probe supported on a cantilever and kept in contact with the work measurement surface and by detecting the displacement amount of the probe is disclosed. The surface roughness and the contour shape of a stepped work bottom portion having bank portions and the bottom portion can be easily measured. The surface roughness and/or contour shape measuring apparatus (1) includes a moving unit (8) for moving the work and the probe (9) relatively to each other in the direction (X) perpendicular to both the longitudinal direction (Z) of the probe (9) and the longitudinal direction (Y) of the cantilever (7).

## Description

This invention relates to a surface roughness and/or contour shape measuring apparatus or, in particular, to a surface roughness and/or contour shape measuring apparatus for measuring the surface roughness and/or the contour shape of an object in two directions.

In a surface roughness and/or contour shape measuring apparatus, a pickup having a probe is moved along the surface of an object to be measured (hereinafter referred to often as the "work"), and the displacement amount of the probe is converted into an electrical signal and read by a computer or the like thereby to measure the surface roughness and/or the contour shape of the work. This surface roughness and/or contour shape measuring apparatus is disclosed in Japanese Unexamined Patent Publication No. 2002-107144. Fig. 1 shows a basic configuration of the conventional surface roughness and/or contour shape measuring apparatus.

The surface roughness and/or contour shape measuring apparatus 1 includes a pickup 6 for measuring the surface roughness of a work placed on a table 2, and the pickup 6 is supported on a holder 5 fixed on a drive unit 4. The pickup 6 supports one end of a cantilever 7, the other end of which has a probe 9 extending in the direction perpendicular to the length of the cantilever 7.

The drive unit 4 is mounted on a column 3 erected on the table 2 and, in response to an instruction from a data processing system (not shown) such as a computer, moves the holder 5. The drive unit 4 can move the holder 5 only along the length of the cantilever 7 (X direction).

Also, the whole drive unit 4 can be moved in vertical direction (Z direction) perpendicular to the table surface along the column 3 in accordance with the work height.

Once the probe 9 is moved while being kept in contact with the work measurement surface by the drive unit 4, the probe 9 is displaced by the roughness of the work surface. This displacement amount is transmitted to the cantilever 7 and converted into an electrical signal by a differential inductance or a differential transformer (not shown) built in the pickup 6. This electrical signal is converted to a digital signal by an A/D converter and input to the data processing system. In this way, the measurement data indicating the surface roughness of the work is acquired by the data processing system.

In this conventional surface roughness and/or contour shape measuring apparatus 1, the pickup 6 can be moved only in X direction by the drive unit 4 along the measurement surface of the work. This is attributable to the fact that each standard (JIS or ISO, for example) on the roughness measurement defines only the roughness measured on a straight line.

In a special case requiring the evaluation of the surface roughness and/or the contour shape in the XY plane, the pickup 6 is moved relatively to the work along the direction in a plane horizontal on the table surface (XY direction) in such a manner that a Y-direction drive unit for moving the work in one another direction (Y direction) different from X direction on the table surface is mounted on the table, and the work is moved so that the pickup 6 and the work are moved, relatively to each other, in Y direction for measurement.

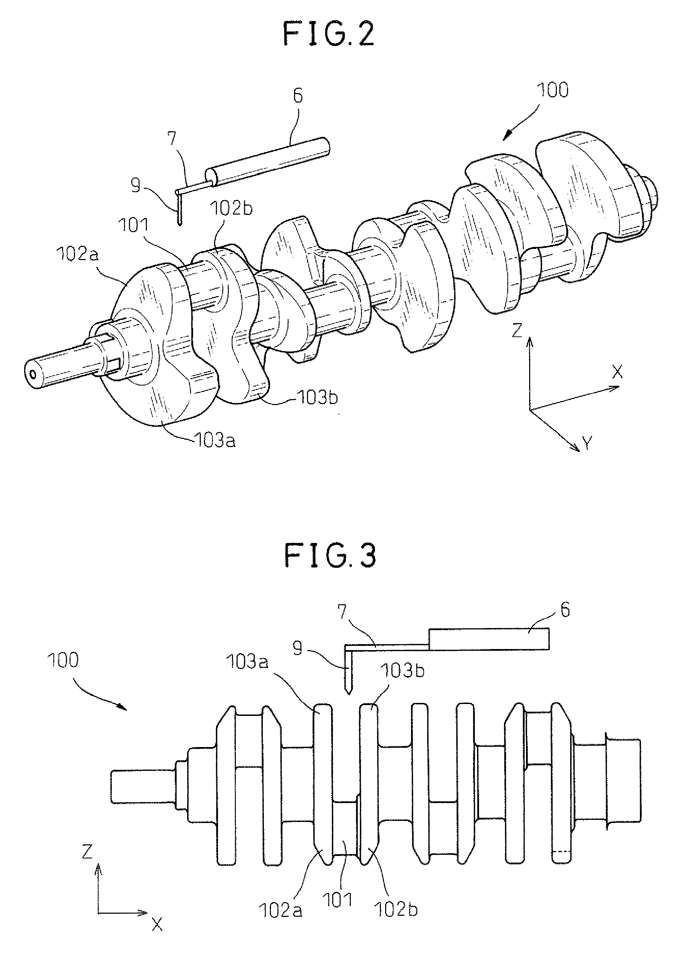

In the case where the surface shape of a work having a stepped portion is measured, or specifically, in the case the surface roughness of the side surface of a crank pin 101 of an engine crankshaft 100 shown in Fig. 2, however, crank arms 102a, 102b and balance weights 103a, 103b act as a bank portion to prevent the approach of the cantilever 7 and the pickup 6, so that the probe 9 is inconveniently unable to come into contact with the crank pin 101.

Namely, in measuring the roughness of the side surface of the crank pin 101 of the crankshaft 100, the probe 9 is required to be moved in X direction along the length of the crankshaft 100 as shown in Fig. 3. In the case where the work, like the crankshaft 100, includes a stepped portion having a bank portion and a bottom portion (in this case, the crank arms 102a, 102b and the balance weight 103a, 103b form a bank portion, and the side surface of the crank pin 101 a bottom portion), however, the cantilever 7 and the pickup 6 interfere with the crank arms 102a, 102b and the balance weights 103a, 103b before the probe 9 comes into contact with the crank pin 101 constituting the surface to be inspected. In such a case, it is very difficult to measure the surface roughness of the side surface of the crank pin 101 to be inspected with the conventional surface roughness and/or contour shape measuring apparatus.

Also, in the case where the Y-direction drive unit for moving the work in Y direction is used as described above, the work of a weight exceeding a limited live load cannot be measured, and therefore the object to be measured by the surface roughness and/or contour shape measuring apparatus is limited.

Further, the deformation and the drive operation of the movable table are affected by the position of the center of gravity, and therefore the displacement amount is varied with the center of gravity or the mounting position of the work, thereby affecting the measurement accuracy.

In order to secure a predetermined live load, the Y-direction drive unit for the work is required to employ a mechanism or a power source having a corresponding margin of capacity, resulting in a bulky, expensive surface roughness and/or contour shape measuring apparatus.

In addition, in the case where the Y-direction drive unit is placed on the table, the presence of a column between the Y-direction drive unit and the drive unit 4 makes it difficult to arrange the Y-direction drive unit exactly perpendicularly to the drive unit 4 due to the effect of temperature change and vibration.

In view of the problems described above, the object of this invention is to provide a surface roughness and/or contour shape measuring apparatus capable of easily measuring the surface roughness and the contour shape of the stepped bottom portion of a work having a bank portion and the bottom portion.

In order to achieve this object, according to this invention, the probe is moved in the direction perpendicular to both the length thereof and the length of the cantilever, while measuring the surface shape of the work measurement surface along the direction in which the probe is moved.

Specifically, according to a first aspect of the invention, there is provided a surface roughness and/or contour shape measuring apparatus, wherein a probe supported on a cantilever is moved while being kept in contact with the work measurement surface and the displacement amount of the probe is detected thereby to measure the surface shape of the work measurement surface, the surface roughness and/or contour shape measuring apparatus comprising a moving unit which moves the probe and the work relatively to each other in the directions perpendicular to the length of the probe and the length of the cantilever.

In the surface roughness and/or contour shape measuring apparatus, the moving unit may be configured to move the probe in the directions perpendicular to the length thereof and the length of the cantilever. Also, in the surface roughness and/or contour shape measuring apparatus, the moving unit moves the probe while being kept in contact with the measurement surface thereby to measure the surface shape of the work measurement surface along the direction in which the moving unit moves.

Further, the surface roughness and/or contour shape measuring apparatus may comprise a drive unit for supporting the probe movably along the length of the cantilever, and a coupling member constituting the moving unit interposed between the cantilever and the drive unit to move the cantilever supporting the probe with respect to the drive unit, in the direction perpendicular to both the length of the probe and the length of the cantilever.

According to a second aspect of the invention, there is provided a surface roughness and/or contour shape measuring method, wherein the probe supported by the cantilever is moved while being kept in contact with the work measurement surface and the displacement amount of the probe is detected to measure the surface shape of the work measurement surface in such a manner that the probe, while being kept in contact with the work surface, is moved in the directions perpendicular to the length of the probe and the length of the cantilever thereby to measure the surface shape of the work measurement surface along the direction in which the probe moves.

In the surface roughness and/or contour shape measuring apparatus and method according to this invention described above, the surface roughness of a bottom portion of the work having a stepped portion including a bank portion and the bottom portion may be measured in such a manner that the probe, while being kept in contact with the bottom portion and setting the length of the cantilever in parallel to the bank portion, is moved in the direction perpendicular to the bank portion thereby to measure the surface shape of the work.

### BRIEF DESCRIPTION OF THE DRAWINGS

The present invention will be more clearly understood from the description as set below with reference to the accompanying drawings, wherein:
Fig. 1 is a diagram showing a basic configuration of the conventional surface roughness and/or contour shape measuring apparatus;
Fig. 2 is a first diagram for explaining the conventional method of measuring the surface roughness of the side surface of the crank pin of the crankshaft;
Fig. 3 is a second diagram for explaining the conventional method of measuring the surface roughness of the side surface of the crank pin of the crankshaft;
Fig. 4 is a diagram showing a basic configuration of a surface roughness and/or contour shape measuring apparatus according to an embodiment of the invention;
Figs. 5A to 5B are enlarged perspective views of the coupling member shown in Fig. 4;
Fig. 5C is a diagram showing the manner in which the coupling member connects the drive unit and the pickup;
Fig. 6A is a side sectional view in the XZ plane of the pickup shown in Fig. 4;
Fig. 6B is a sectional view taken in line A-A' in Fig. 6A;
Fig. 6C is a perspective view for explaining the shape of the fixed portion shown in Fig. 6A;
Figs. 7A and 7B are diagrams for explaining a method of measuring the surface roughness of a work having a stepped portion;
Fig. 8 is a first diagram for explaining a method of measuring the surface roughness of the side surface of the crank pin of the crankshaft according to this invention; and
Fig. 9 is a second diagram for explaining a method of measuring the surface roughness of the side surface of the crank pin of the crankshaft according to this invention.

### DESCRIPTION OF THE PREFERRED EMBODIMENTS

Preferred embodiments of the present invention will be described in detail below while referring to the attached figures.

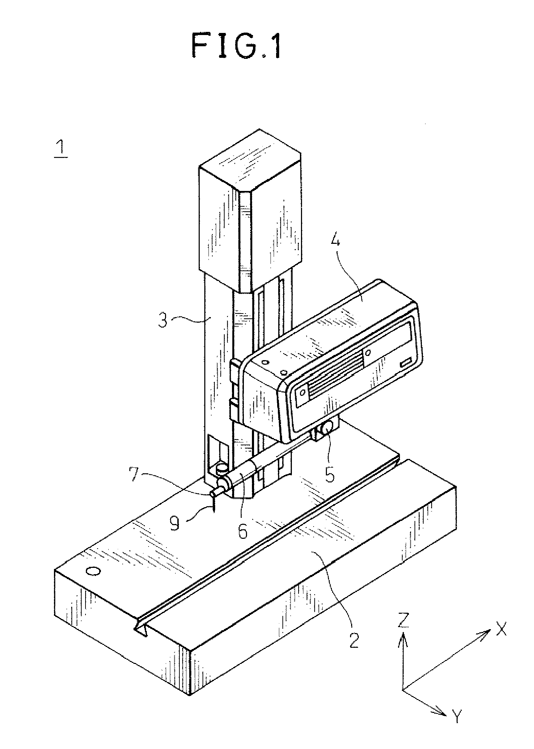

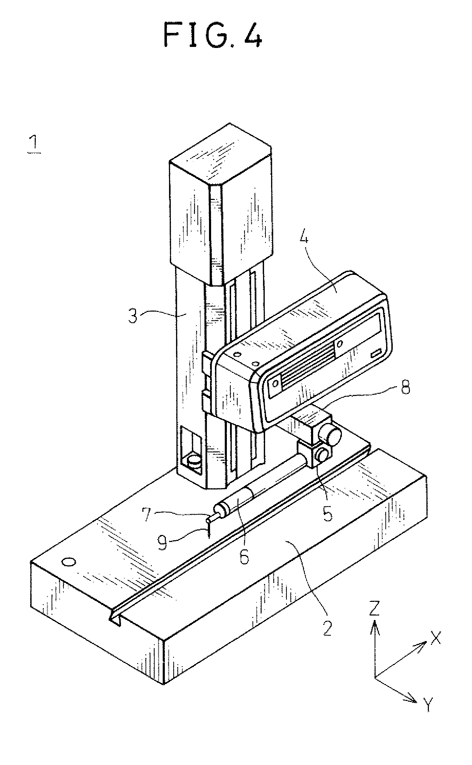

Fig. 4 is a diagram showing a basic configuration of a surface roughness and/or contour shape measuring apparatus according to an embodiment of the invention. The basic configuration of the surface roughness and/or contour shape measuring apparatus 1 is similar to the configuration shown in Fig. 1, and the same functions in these drawings are designated by the same reference numerals, respectively, and not explained again.

As shown in Fig. 4, in the surface roughness and/or contour shape measuring apparatus 1, a pickup 6 and a cantilever 7 are mounted with the longitudinal direction thereof along X direction, i.e. the direction in XY plane in which a probe 9 is driven by a drive unit 4 on the table surface. The probe 9 is mounted at the forward end of the cantilever 7 in such a manner as to extend in Z direction perpendicular to the length of the cantilever 7.

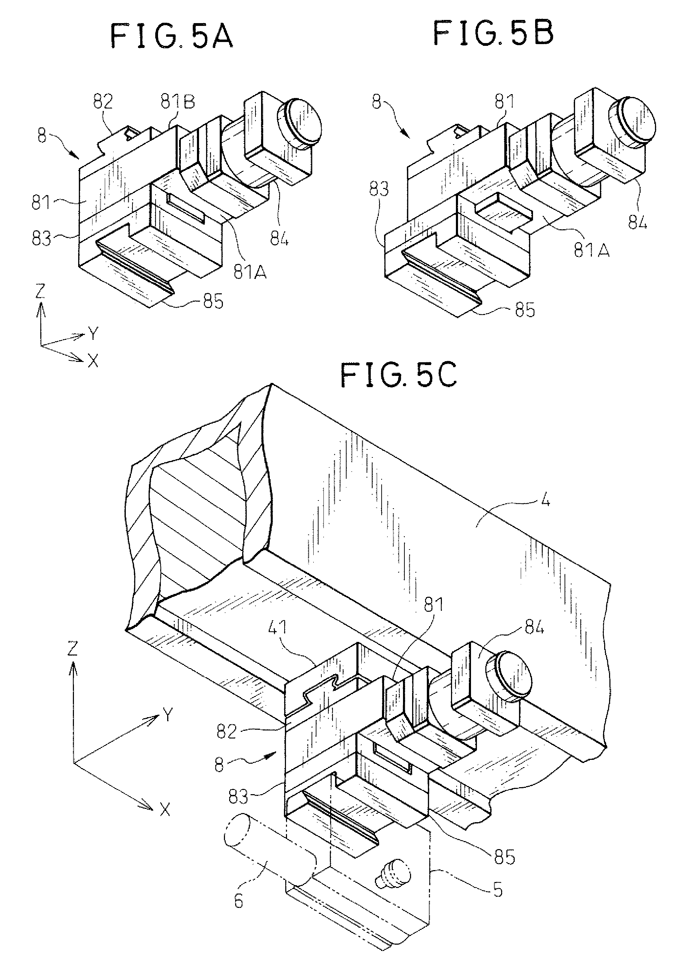

Further, a holder 5 supporting the pickup 6 and the drive unit 4 are connected to each other through a coupling member 8. The coupling member 8 can move the pickup 6 in Y direction perpendicular to both X direction along the length of the cantilever 7 and Z direction along the length of the probe 9. An enlarged view of this coupling member 8 is shown in Fig. 5A.

As shown in Fig. 5A, the coupling member 8 includes a body 81, a first attachment 82 fixed on the body 81 and held in engagement with a drive unit-side attachment 41 (Fig. 5C) to fix the body 81 on the drive unit 4, a movable portion 83 adapted to move in Y direction with respect to the body 81, a motor 84 for driving the movable portion 83 and a second attachment 85 fixed on the movable portion 83 and holding by engaging the holder 5. The motor 84 is driven in accordance with the instruction from the data processing system (not shown) described above.

The movable portion 83 is mounted on the body 81 in such a manner as to be capable of sliding in the Y direction on a predetermined surface 81A of the body 81. The movable portion 83 driven in the Y direction on the predetermined surface 81A of the body 81 is shown in Fig. 5B.

Fig. 5C is a diagram showing the manner in which the coupling member 8 is mounted between the drive unit 4 and the holder 5 for holding the pickup 6. As shown in Fig. 5C, the first attachment 82 of the coupling member 8 is held in engagement with the drive unit-side attachment 41 driven in the X direction by the drive unit 4. The holder 5 to hold the pickup 6, on the other hand, is held in engagement with the second attachment 85 fixed on the movable portion 83 adapted to move in the Y direction with respect to the body 81.

With this configuration, the pickup 6, the cantilever 7 and the probe 9 can be driven by the drive unit 4 and the coupling member 8 in both the X and the Y directions.

In order to measure the surface roughness and/or the contour shape of the work measurement surface along the Y direction, the motor 84 for driving the pickup 6, etc. in the Y direction is preferably not a stepping motor or the like rotated or driven stepwise but a motor (such as a DC motor) rotated or driven steplessly.

This coupling member 8, in addition to the drive unit-side attachment 41 and the holder 5 originally included in the existing surface roughness and/or contour shape measuring apparatus 1, includes the first attachment 82 and the second attachment 85 adapted to engage the drive unit-side attachment 41 and the holder 5. The coupling member 8 can thus be easily mounted later on the existing surface roughness and/or contour shape measuring apparatus 1 having no Y-direction drive mechanism.

Also, by changing the angle at which the first attachment 82 is mounted on the surface 81B (XY surface) of the body 81 by 90 degrees, the coupling member 8 can be engaged with the drive unit-side attachment 41 in such a manner that the pickup 6 is driven by the coupling member 8 in the X direction. In this way, the pickup 6 can be driven by the coupling member 8 in the same direction as the drive unit-side attachment 41 is driven by the drive unit 4, thereby making it possible to widen the range in which the pickup 6 is driven in the X direction.

Further, by mounting the first attachment 82 on the XZ plane (i.e. the surface far from the mounting surface of the motor 84) of the body 81, the coupling member 8 can be engaged with the drive unit-side attachment 41 in such a manner that the pickup 6 is driven in the Z direction by the coupling member 8. As a result, the surface shape of the work on the orthogonal XZ plane can be measured.

As described above, the direction in which the coupling member 8 is mounted on the drive unit-side attachment 41 or the holder 5 can be adjusted in such a manner that the pickup 6 is driven by the coupling member 8 in the same direction as any of the two directions orthogonal to the direction in which the coupling member 8 is driven by the drive unit 4 on the one hand, and can be adjusted to the direction in which the coupling member 8 is driven by the drive unit 4. Further, by differentiating the angle at which the first attachment 82 is mounted on the mounting surface of the body 81 and the angle at which it is mounted on the mounting surface of the drive unit-side attachment 41 (setting them out of parallel to each other), the direction in which the pickup 6 is driven by the coupling member 8 can be tilted from the X direction (with a tilt angle).

Further, in order to adjust the relative angle between the direction in which the pickup 6 is driven by the coupling member 8 and the direction in which the coupling member 8 is driven by the drive unit 4, the drive unit-side attachment 41 or the first attachment 82 may be equipped with an angle adjusting mechanism such as a ballhead.

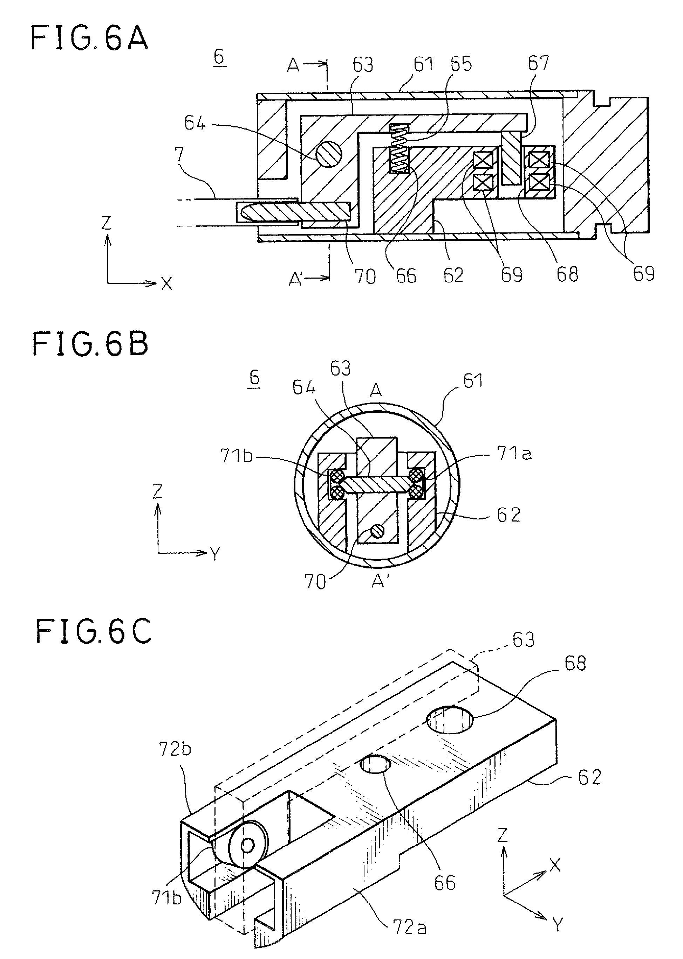

Fig. 6A is a side sectional view taken in the XZ plane of the pickup 6 shown in Fig. 4, and Fig. 6B a sectional view taken in line A-A' in Fig. 6A. The case 61 of the pickup 6 contains therein a fixed portion 62 fixed on the case 61 and a movable portion 63 pivotally supported on the fixed portion 62 with the pivot shaft 64 along the Y direction as a rotary axis. Fig. 6C is a perspective view for explaining the shape of the fixed portion 62 shown in Fig. 6A.

As shown in Fig. 6C, the fixed portion 62 is formed with arm portions 72a, 72b for holding the pivot shaft 64 of the movable portion 63 from the two ends thereof, and bearings 71a, 71b for supporting the pivot shaft 64 are mounted on the arm portions 72a, 72b, respectively.

The movable portion 63 has a cantilever-mounting pin 70 for fixing the cantilever 7 on the movable portion 63. The cantilever-mounting pin 70 fixed on the movable portion 63 is inserted into the mounting hole formed at the mounting end of the cantilever 7 thereby to fix the cantilever 7 on the movable portion 63.

Further, the movable portion 63 has an urging means 65 such as a spring to urge the movable portion 63 fixed with the cantilever 7 in the swinging direction in such a manner that the probe 9 arranged at the end far from the mounting end of the cantilever 7 moves following the work surface while being kept in contact therewith. In the case of Fig. 6A, the movable portion 63 is urged by a compression spring 65 mounted in the spring-receiving depression 66 of the fixed portion 62.

With the movement of the pickup 6 by the coupling member 8 and the drive unit 4, therefore, the probe 9 can slide on the work surface following the roughness thereof. The displacement of the probe 9 generated by the roughness of the work surface is transmitted to the movable portion 63 through the cantilever 7 so that the movable portion 63 is swung with the pivot shaft 64 as a rotary axis.

With the movement of the pickup 6 in Y direction by the coupling member 8, the friction force is generated in Y direction between the moving probe 9 and the work surface. To assure the smooth swinging motion of the movable portion 63 against the yawing force which may be generated by this friction force and exerted on the cantilever 7, the forward end of the pivot axis 6 is formed substantially conically and the bearings 71a, 71b support, by their spherical surfaces, the substantially conical ends of the pivot shaft 64.

With the displacement of the probe 9 sliding on the work surface due to the roughness of the work surface, the displacement amount thereof is converted into an electrical signal by a differential inductance sensor arranged on the pickup 6. The differential inductance sensor is configured of a magnetic core 67 fixed on the movable portion 63, an insertion port 68 formed on the fixed portion 62 for insertion of the magnetic core 67 when the movable portion 63 is supported on the fixed portion 62, and two coils 69 arranged around the core insertion port 68 position as to surround the magnetic core 67. In the differential inductance sensor, the motion of the magnetic core 67 with the pivotal motion of the movable portion 63 is detected as a change of inductance difference between the two coils 69 so that the displacement amount of the movable portion 63 is converted into an electrical signal.

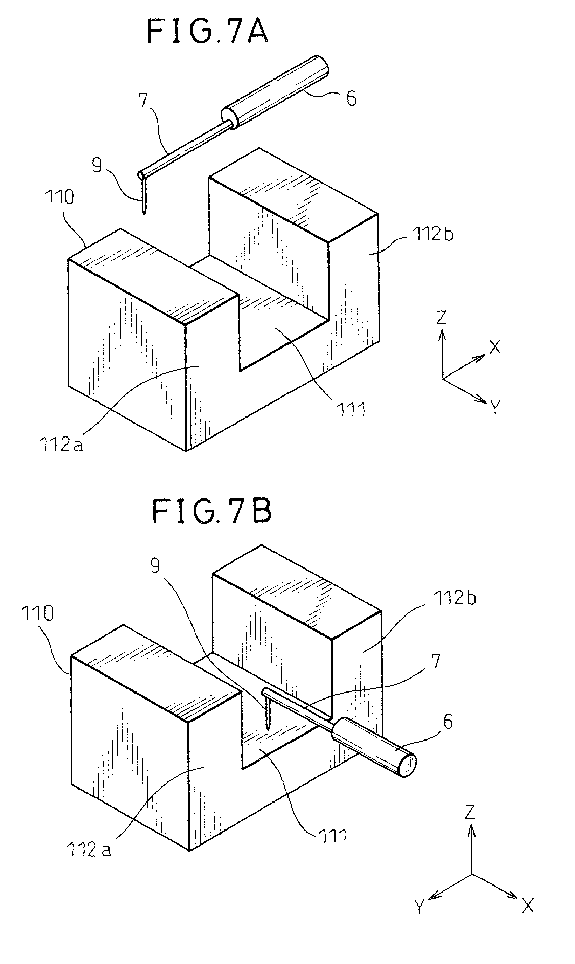

Fig. 7A is a diagram for explaining a method of measuring the roughness of a stepped work surface by the conventional surface roughness and/or contour shape measuring apparatus shown in Fig. 1, and Fig. 7B a diagram for explaining a method of measuring the roughness of the stepped work surface by the surface roughness and/or contour shape measuring apparatus according to the embodiment of the invention shown in Fig. 4.

As shown in Fig. 7, the work 110 includes a stepped portion constituting an inspection surface having a bottom portion 111 and banks 112a, 112b. As shown in Fig. 7A, the surface roughness or the contour shape of the bottom portion 111 is measured while sliding the probe 9 in the stepped direction, i.e. the direction perpendicular to the extension of the banks 112a, 112b (X direction in Fig. 7A).

As described above, in the conventional surface roughness and/or contour shape measuring apparatus, the probe 9 is movable only along the length of the cantilever 7. In the measurement process, therefore, the work 110 is arranged on the table 2 in such a position that the direction of measurement, i.e. the stepped direction (the direction perpendicular to the extension of the banks 112a, 112b) coincides with the longitudinal direction of the cantilever 7.

As a result, the banks 112a, 112b interfere with the cantilever 7 and the pickup 6, thereby making it difficult to bring the probe 9 into contact with the bottom portion 111.

In the surface roughness and/or contour shape measuring apparatus according to an embodiment of the invention, on the other hand, as shown in Fig. 7B, the probe 9 can be moved in the direction perpendicular to both the length thereof and the length of the cantilever 7 (the Y direction in Fig. 7B).

In measurement operation, therefore, the cantilever 7 can be arranged with the length thereof in the measurement direction perpendicular to the stepped direction, i.e. the Y direction in Fig. 7A free of steps (the direction parallel to the extension of the bank portions 112a, 112b, i.e. the X direction in Fig. 7B).

As a result, the measurement can be conducted with the longitudinal direction of the cantilever 7 and the pickup 6 kept along the bank portions 112a, 112b. Thus, the probe 9 can be easily moved in the stepped direction (the direction perpendicular to the bank portions, or the Y direction in Fig. 7B) while being kept in contact with the bottom portion 111 without interference with the band portions 112a, 112b.

Instead of moving the probe 9 in the direction perpendicular to the length thereof and the length of the cantilever 7, a work moving mechanism may be arranged on the table 2 to move the work 110 in the direction perpendicular to the length of the probe 9 and the length of the cantilever 7. Then, by moving the probe 9 and the work 110 relatively to each other in the direction perpendicular to the length of the probe 9 and the length of the cantilever 7, therefore, the probe 9 can be moved in the stepped direction (Y direction in Fig. 7B) while being kept in contact with the bottom portion 111 without interference of the cantilever 7 and the pickup 6 with the banks 112a, 112b.

According to this embodiment, however, the probe 9 itself is moved in the direction perpendicular to both the length of the probe 9 and the cantilever 7 using the coupling member 8, so that the surface roughness and/or contour shape measuring apparatus 1 having a simple and compact configuration is obtained.

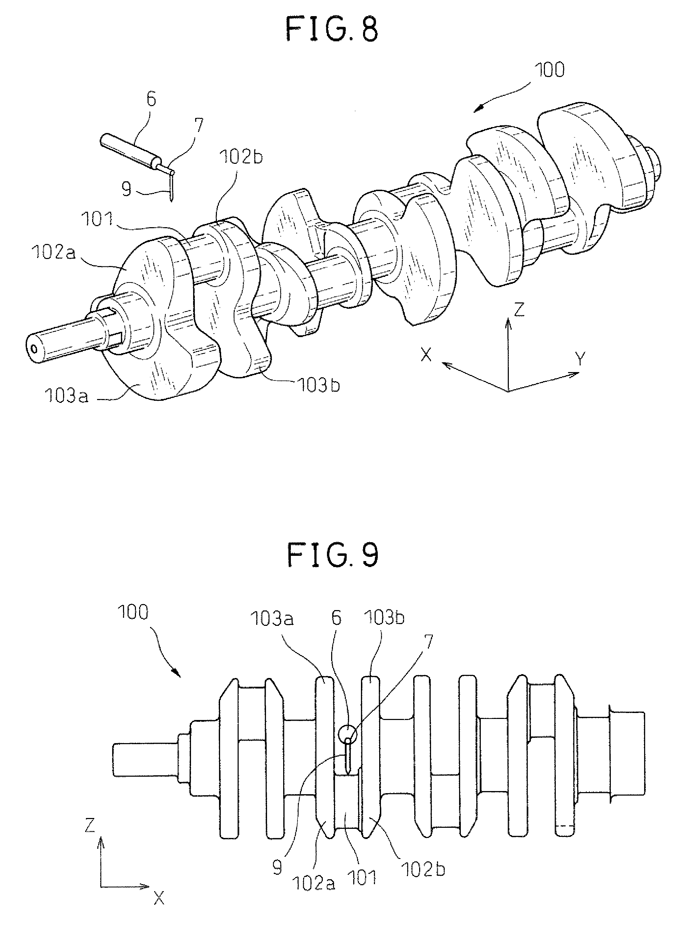

Fig. 8 is a diagram for explaining a case in which the surface roughness and/or the contour shape of the side surface of the crank pin 101 of the crankshaft 100 like in Fig. 2 are measured along the length of the crankshaft 100 by the surface roughness and/or contour shape measuring method according to an embodiment of the invention.

Unlike in the conventional measurement method explained above with reference to Fig. 2, in the measurement method according to this invention, the probe 9 can be brought into contact with the side surface of the crank pin 101 while the length of the cantilever 7 and the pickup 6 are perpendicular to the length of the crankshaft 100. Thus, it is possible to avoid the interference of the cantilever 7 and the pickup 6 with the crank arms 102a, 102b and the balance weights 103a, 103b.

Specifically, as shown in Fig. 9, in the case where the surface roughness along the Y direction of the side surface of the crank pin 101 is measured by moving the probe 9 along the Y direction along the length of the crankshaft 100 and, a stepped portion including the crank arms 102a, 102b and the balance weights 103a, 103b constituting bank portions and the side surface of the crank pin 101 to be inspected as a bottom portion exist in the Y direction constituting the direction of measurement.

In the surface roughness and/or contour shape measuring apparatus according to an embodiment of the invention, however, the probe 9 can be moved with the length of the cantilever 7 and the length of the pickup 6 set at right angles to the length of the crankshaft 100 (Y direction) along the stepped direction (i.e. the direction perpendicular to the extension of the bank portions). Therefore, the probe 9 can be kept in contact with the side surface of the crank pin 101 without interference of the cantilever 7 and the pickup 6 with the crank arms 102a, 102b and the balance weights 103a, 103b.

According to this invention, the surface roughness of the stepped bottom portion of a work having bank portions and the bottom portion can be measured while keeping the probe in contact with the bottom portion in the state when direction of the length of the cantilever is parallel to the direction of the extension of the bank portions. Therefore, the situation in which the probe cannot contact the bottom portion due to the interference between the cantilever and the bank portions is avoided.

It can also be understood from the foregoing description that the provision of a coupling member for moving the probe in the direction perpendicular to both the length thereof and the length of the cantilever makes it possible to move the probe in the particular direction without moving the work. As a result, the surface shape of the work within the measurement surface range can be measured without being limited by the maximum live load of the work drive unit such as the work moving table. Further, the pickup driven by the coupling member is a comparatively light in weight, and therefore, a compact, simple and inexpensive apparatus with a highly accurate mechanism can be realized.

This invention can find wide applications as a measuring apparatus for measuring the surface shape by moving a probe or the like measurement unit along the surface of an object to be measured.

## Claims

1. A surface roughness and/or contour shape measuring apparatus for measuring the surface shape of a measurement surface of a work by moving a probe (9), supported on a cantilever (7), while being kept in contact with the work measurement surface and detecting the displacement amount of the probe (9), the apparatus further comprising;
a moving unit (8) which moves the probe (9) and the work relatively to each other in the direction perpendicular to both the length of the probe (9) and the length of the cantilever (7).

2. A surface roughness and/or contour shape measuring apparatus according to claim 1,
wherein the moving unit (8) moves the probe (9) in the direction perpendicular to both the length of the probe (8) and the length of the cantilever (7).

3. A surface roughness and/or contour shape measuring apparatus according to claim 1 or 2, further comprising:
a drive unit (4) for supporting the probe (9) movably along the length of the cantilever (7); and
a coupling member (8) constituting the moving unit (8) interposed between the cantilever (7) and the drive unit (4) and moving the cantilever (7) for supporting the probe (9) with respect to the drive unit (4), in the direction perpendicular to both the length of the probe (9) and the length of the cantilever (7).

4. A surface roughness and/or contour shape measuring apparatus according to claim 2,
wherein the probe (9) is moved by the moving unit (8) while being kept in contact with the measurement surface thereby to measure the surface shape of the measurement surface along the direction in which the moving unit (8) moves.

5. A surface roughness and/or contour shape measuring apparatus according to claim 4, further comprising:
a drive unit (4) for supporting the probe (9) movably along the length of the cantilever (7); and
a coupling member (8) constituting the moving unit (8) interposed between the cantilever (7) and the drive unit (4) and moving the cantilever (7) for supporting the probe (9) with respect to the drive unit (4) in the direction perpendicular to both the length of the probe (9) and the length of the cantilever (7).

6. A surface roughness and/or contour shape measuring method for measuring the surface shape of the measurement surface of a work by moving a probe (9), supported on a cantilever (7), while being kept in contact with the measurement surface, and detecting the displacement amount of the probe (9),
wherein the probe (9) is moved in the direction perpendicular to both the length of the probe (9) and the length of the cantilever (7) while being kept in contact with the measurement surface thereby to measure the surface shape of the measurement surface along the direction in which the probe (9) is moved.

7. A surface roughness and/or contour shape measuring method according to claim 6,
wherein the probe (9) is kept in contact with the bottom portion (111) of the work including a stepped portion having bank portions (112a, 112b) and the bottom portion (111) and directed along the length of the cantilever (7) parallel to the bank portions (112a, 112b), while the probe (9) is moved in the direction perpendicular to the bank portions (112a, 112b) thereby to measure the surface shape of the work.
